(19) Europäisches Patentamt

European Patent Office

Office européen des brevets

(11) **EP 0 614 067 B1**

## (12) EUROPÄISCHE PATENTSCHRIFT

(45) Veröffentlichungstag und Bekanntmachung des Hinweises auf die Patenterteilung:
**05.03.1997 Patentblatt 1997/10**

(51) Int Cl.$^6$: **G01B 9/02**

(21) Anmeldenummer: **93119047.4**

(22) Anmeldetag: **25.11.1993**

(54) **Phasenmoduliertes Interferometer**

Phase modulation interferometer

Interféromètre à modulation en phase

(84) Benannte Vertragsstaaten:
**AT CH DE FR GB IT LI**

(30) Priorität: **05.03.1993 DE 4306884**

(43) Veröffentlichungstag der Anmeldung:
**07.09.1994 Patentblatt 1994/36**

(73) Patentinhaber: **JENOPTIK Aktiengesellschaft**
**D-07743 Jena (DE)**

(72) Erfinder:
• **Dammann, Ehrhard**
  **D-07743 Jena (DE)**
• **Bauer, Jürgen**
  **D-07745 Jena (DE)**

(74) Vertreter: **Geyer, Werner, Dr.-Ing. et al**
**Patentanwälte**
**GEYER & FEHNERS**
**Perhamerstrasse 31**
**80687 München (DE)**

(56) Entgegenhaltungen:
**EP-A- 0 612 976    DE-A- 3 533 695**

• **FIRST INTERN. CONFE. ON OPTICAL FIBRE SENSORS, 26. April 1983, LONDON Seiten 205 - 209 S.A. KINGSLEY 'FIBER-OPTIC INTERFEROMETRIC SIGNAL PROCESSOR EMPLOYING A DIFFERENTIATE AND CROSS-MULTIPLY FREQUENCY DISCRIMINATOR'**
• **TECHNISCHES MESSEN TM, Bd.58, Nr.4, April 1991, MUNCHEN DE Seiten 152 - 157 R. FUEST 'INTEGRIERT OPTISCHES MICHELSON-INTERFEROMETER MIT QUADRATUR-DEMODULATION IN GLAS ZUR MESSUNG VON VERSCHIEBEWEGEN'**
• **PATENT ABSTRACTS OF JAPAN vol. 17, no. 246 (P-1536) 17. Mai 1993 & JP-A-04 366 703 (HITACHI LTD.) 18. Dezember 1992**

**Beschreibung**

Die Erfindung betrifft ein phasenmoduliertes Interferometer zur Auswertung von Phasenverschiebungen aufgrund von Änderungen optischer Weglängen im Meßarm des Interferometers. Insbesondere findet sie Anwendung für Präzisionslängenmeßsysteme, die vorzugsweise das Heterodynverfahren zur Auswertung verwenden.

Präzisionslängenmeßsysteme, basierend auf Interferometern, sind seit Einführung des Lasers bekannt. Prinzipiell wird zwischen homodynen und heterodynen Auswerteverfahren unterschieden. Heterodynverfahren werden im allgemeinen bevorzugt aufgrund ihrer Möglichkeit des Vor- und Rückwärtszählens und der infolge verschwindenden Gleichlichtanteils hohen Interpolation. Derzeit wird ausschließlich die Einseitenbanddetektion zur Auswertung genutzt. Zur Erzeugung eines Seitenbandes bzw. zur räumlichen Trennung der Seitenbänder werden Zeemann-Aufspaltung oder Braggablenkung genutzt. Bei integrierten optischen Heterodyninterferometern kann neben der Strahlteilung und -rekombination auch eine Frequenz- oder Phasenmodulation vorgenommen werden. Wegen der Stabilität und der aufwendigen Abbildung von monomodigen Streifenwellenleitern auf Schichtwellenleitern und umgekehrt mit Hilfe von Tapern, Linsen oder Gittern werden Interferometer mit durchgehenden Streifenwellenleitern angestrebt. Dadurch entfällt jedoch die akustooptische Braggablenkung zur räumlichen Trennung der Seitenbänder. Auf der Grundlage des elektrooptischen Effekts läßt sich im Streifenwellenleiter eine Phasenmodulation realisieren. Bei genau definierter elektrischer Ansteuerung des Modulators kann eine Seitenbandunterdrückung erreicht werden. So beschreibt VOGES u.a. in IEEE Journ. Quant. Electr. QE-18 (1982), S. 124-129 eine definierte elektrische Ansteuerung des Modulators durch Sägezahnimpulse mit definiertem Rücklaufund erreicht damit eine Seitenbandunterdrückung von 40dB. Die Erzeugung solcher Ansteuersignale ist jedoch aufwendig und erfordert sehr hohen Regelaufwand.

Ein phasenmoduliertes Interferometer, bei dem ein Sinussignal am Phasenmodulator anliegt, ist aus JP-A-4 366 703 bekannt.

Der Erfindung liegt die Aufgabe zugrunde, ein phasenmoduliertes Interferometer zu realisieren, das ohne komplizierte Ansteuerung des Phasenmodulators zu auswertefähigen Überlagerungssignalen aus Meß- und Referenzarm des Interferometers gelangt.

Erfindungsgemäß wird die Aufgabe bei einem phasenmodulierten Interferometer mit einem Meßarm und einem Referenzarm, in dem in einem der beiden Interferometerarme ein Phasenmodulator zur Phasenmodulation der optischen Strahlung angeordnet ist und in dem ein Detektor zur Aufnahme eines optischen Überlagerungssignals aus Meß- und Referenzarm vorhanden ist, wobei dem Detektor eine Auswerteelektronik zur Bestimmung der Phasenverschiebung des Signals nachgeordnet ist, dadurch gelöst, daß am Phasenmodulator ein sinusförmiges Ansteuersignal mit einer bestimmten Modulationsfrequenz und Amplitude anliegt, daß eine Einrichtung zur multiplikativen Mischung des Überlagerungssignals mit einem Sinussignal mit geeigneter Mischfrequenz im Signalweg des Überlagerungssignals angeordnet ist, wobei dieses Sinussignal phasen- und frequenzstarr mit dem Ansteuersignal gekoppelt ist, daß dem Detektor ein Bandpaßfilter nachgeordnet ist, dessen Filterfrequenz sich aus der Übereinstimmung von Summen- und Differenzfrequenz aus der Modulationsfrequenz oder deren Oberwellen und der Mischfrequenz zu

$$\omega_F = (2m-1)\,\omega_o + \omega_M = 2n\,\omega_o - \omega_M$$

mit $m,n = 1,2,3,...$
und $m \leq n$

ergibt, so daß bei geeigneter Wahl eines durch die Amplitude des Ansteuersignals beeinflußten Arbeitspunktes am Ausgang des Bandpaßfilters ein Signal der Form

$$S = const \cdot \cos\,(\omega_F t - kx)$$

entsteht, das mit üblichen Verfahren zur Bestimmung der Phasenverschiebung ausgewertet wird und bei dem $t$ die Zeit, $k$ die Wellenzahl und $x$ die zu messende Distanz sind.

Dabei läßt sich die Einrichtung zur multiplikativen Mischung des Überlagerungssignals mit einem Sinussignal in zwei Varianten gestalten. Zweckmäßig ist diese Einrichtung ein Multiplikator, der dem Detektor nachgeordnet ist und an dessen zweitem Eingang das Sinussignal mit der geeigneten Mischfrequenz anliegt.

Die zweite Möglichkeit zur Realisierung der multiplikativen Mischung ergibt sich vorteilhaft durch Einsatz eines zweiten Phasenmodulators, dem im Signalweg des optischen Überlagerungssignals vor dem Detektor liegend ein Ansteuersignal mit der geeigneten Mischfrequenz zugeführt wird.

Für beide Varianten wird der bekannte erste Phasenmodulator so eingestellt, daß die Amplitude des Ansteuersignals die Gleichung

$$J_{2m-1}\,(2\varphi_o) = J_{2n}\,(2\varphi_o)$$

mit $m,n = 1,2,3,...$ erfüllt, wobei die $J_i$ die i-te Besselfunktion ist.

Eine vorteilhafte Gestaltungsmöglichkeit des erfindungsgemäßen Interferometers ist die Verwendung in einem dreiarmigen Interferometer, beispielsweise zur Kompensation von Wellenlängendriften bei einer Wegmessung, wobei zwei Referenzarme vorhanden sind, die beide mit demselben Meßarm zwei separat auszuwertende Überlagerungssignale hervorbringen, indem in jedem Signalweg der zwei Überlagerungssignale der zweite Phasenmodulator vor dem Detektor angeordnet ist und somit eine integriert-optische Realisierung dieser optischen Sinussignalzumischung möglich ist.

Eine weitere zweckmäßige integriert-optisch realisierbare Ausführung der Erfindung ist ein dreiarmiges Interferometer, bei dem beispielsweise zur Erreichung einer gekoppelten Zwei-Koordinaten-Wegmessung zwei Meßarme vorhanden sind, die beide mit demselben Referenzarm zwei separat auszuwertende Überlagerungssignale hervorbringen, wobei in jedem Signalweg der zwei Überlagerungssignale ein besagter zweiter Phasenmodulator vor dem Detektor angeordnet ist.

Für beide Gestaltungsmöglichkeiten von dreiarmigen Interferometern kann auch problemlos von einer optischen Sinussignalzumischung mittels elektrooptischen Phasenmodulators auf eine elektronische Sinussignalmischung nach dem Detektor gewechselt werden.

Es erweist sich weiterhin von Vorteil, aus dem Frequenzspektrum des Überlagerungssignals ein oder mehrere Signale unterschiedlicher Frequenzen zur Regelung des Ansteuersignals des bekannten Phasenmodulators auszufiltern.

Die grundlegende Idee der Erfindung liegt in der Überlegung, mit einer einfachen Sinusansteuerung des bekannten Phasenmodulators eine Signalstruktur des Überlagerungssignals aus Meß- und Referenzsignal zu erzeugen, die sich in bekannter Weise bezüglich Phasenverschiebungen im Meßarm auswerten läßt. Das wird gemäß der Erfindung erreicht, indem dem Überlagerungssignal aus Meß-und Referenzarm ein phasen- und frequenzstabil an die Sinusansteuerung des bekannten Phasenmodulators gekoppeltes Sinussignal zugemischt und aus dem Frequenzspektrum des so entstandenen Mischsignals ein Signal bei einer Filterfrequenz ausgefiltert und analysiert wird, bei der die Summen- und Differenzfrequenzen aus zwei unterschiedlichen Harmonischen der Modulationsfrequenz des bekannten Phasenmodulators und der Mischfrequenz des beigemischten Sinussignals gleich sind. Mit der Wahl eines geeigneten Arbeitspunktes der Amplitude des Ansteuersignals am Phasenmodulator entsteht damit ein in üblicher Weise auswertbares Kosinussignal zur Bestimmung der Phasenverschiebung.

Mit dem erfindungsgemäßen phasenmodulierten Interferometer ist es möglich, anstelle einer komplizierten Sägezahnansteuerung mit einer Sinusansteuerung und einer Sinussignalbeimischung im Überlagerungssignal des Interferometers zu derselben Signalstruktur zu gelangen, die die Auswertung von Phasenverschiebungen und damit eine gewünschte Wegmessung gestattet.

Die einfache Sinusansteuerung für Phasenmodulator und Mischsignalerzeugung bringt zudem noch den Vorteil, daß sich entsprechende elektrooptische Modulatoren auf integriert-optischen Chips (IOC) realisieren lassen und somit ein integriert-optisches phasenmoduliertes Interferometer, insbesondere Heterodyninterferometer, für verschiedene technische Anwendungen industriell herstellbar ist.

In der EP-A-0 612 976, veröffentlicht am 31.8.94, wird das gleiche Problem dadurch gelöst, daß die Phasenmodulation mit zwei phasengekoppelten frequenzstabilen Sinussignalen an einem Modulator erfolgt. Aus dem Überlagerungssignal wird schmalbandig eine Frequenz ausgefiltert, die sowohl einer ungeradzahligen Harmonischen der ersten Modulationsfrequenz als auch einer geradzahligen Harmonischen der zweiten Modulationsfrequenz entspricht. Mit der Wahl eines geeigneten Arbeitspunktes des Phasenmodulators entsteht im Ergebnis der Filterung ein im üblicher Weise auf Phasenverschiebung analysierbares Kosinussignal.

Die Erfindung soll nachstehend anhand zweier Ausführungsbeispiele näher erläutert werden. Die Zeichnungen zeigen:

Fig. 1    ein Blockschaltschema der erfindungsgemäßen Anordnung

Fig. 2    eine Ausführungsform mit elektrischer Sinussignalbeimischung

Fig. 3    eine Gestaltungsform als integriert-optisches Doppelinterferometer mit optischer Sinussignalbeimischung

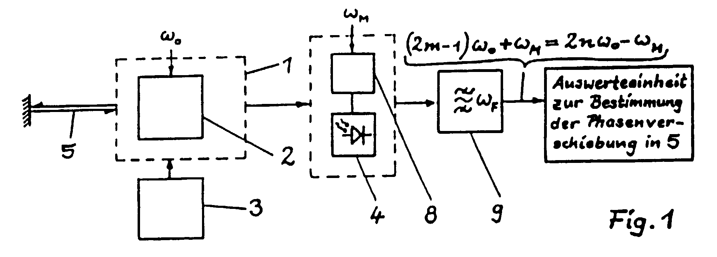

Das erfindungsgemäße Interferometer besteht in seinem Grundaufbau - wie in Fig. 1 dargestellt - aus einer Interferometeranordnung, die vorzugsweise als integriert-optischer Chip (IOC 1) ausgeführt ist und die in einem ihrer Interferometerarme (Meß- bzw. Referenzarm) einen Phasenmodulator 2 aufweist, wobei die Interferometeranordnung in üblicher Weise mit einer Laserquelle, vorzugsweise in Form einer Laserdiode 3, einem Detektor 4 und einer den Meßarm des Interferometers bestimmenden Meßstrecke 5 gekoppelt ist.

Aus den Meß- und Referenzarmsignalen wird das sogenannte Überlagerungssignal gebildet, das bis zu seiner Analyse auf Phasenverschiebung optisch und elektronisch beeinflußt und verarbeitet wird, wobei die optoelektronische Wandlung im Detektor 4 einen Schritt der üblichen Verarbeitung darstellt.

Erfindungsgemäß wird der bekannte Phasenmodulator 2 mit einem rein sinusförmigen Ansteuersignal mit der Modulationsfrequenz $\omega_o$ angesteuert und dem Überlagerungssignal mittels einer Einrichtung 8 zur multiplikativen Mischung des Überlagerungssignals mit einem Sinussignal mit der Mischfrequenz $\omega_M$ das phasen-und frequenzstarr mit dem Ansteuersignal gekoppelt ist, beigemischt. Den im Signalweg des Überlagerungssignals angeordneten Verarbeitungskomponenten Detektor 4 und Einrichtung 8 folgt ein elektronisches Bandpaßfilter 9, das relativ schmalbandig (dem Frequenzbereich der Meßaufgabe angepaßt) eine Signalkomponente ausfiltert, die sowohl die Summenfrequenz als auch die Differenzfrequenz aus Harmonischen der Ansteuerfrequenz $\omega_o$ und Mischfrequenz $\omega_M$ enthält, und das somit eine Filterfrequenz $\omega_F$

$$\omega_F = (2m-1)\,\omega_o + \omega_M = 2n\,\omega_o - \omega_M$$

mit m,n = 1,2,3,...
und m ≤ n

aufweist.

In einer nachfolgenden Auswerteeinheit zur Bestimmung der Phasenverschiebung innerhalb der Meßstrecke 5 liegt dann bei geeigneter Arbeitspunkteinstellung bezüglich der Amplituden der zwei ausgewählten Harmonischen der Ansteuerfrequenz $\omega_o$ ein Signal der Struktur

$$S = const \cdot (\omega_F t - kx)$$

vor, das mit den üblichen Auswertemethoden auf Phasenverschiebung ausgewertet werden kann und in der t die Zeit, und k die Wellenzahl und x die zu messende Distanz bedeuten.

Der geeignete Arbeitspunkt zur Vereinfachung der Signalstruktur, wie sie oben angegeben ist, entsteht bei Einhaltung der Bedingung

$$J_{2m-1}\,(2\varphi_o) = J_{2n}\,(2\varphi_o)$$

mit m,n=1,2,3,...
und m ≤ n,

wobei $J_i$ die i-te Besselfunktion ist und $\varphi_o$ die Amplitude des Ansteuersignals mit der Modulationsfrequenz $\omega_o$ bedeutet.

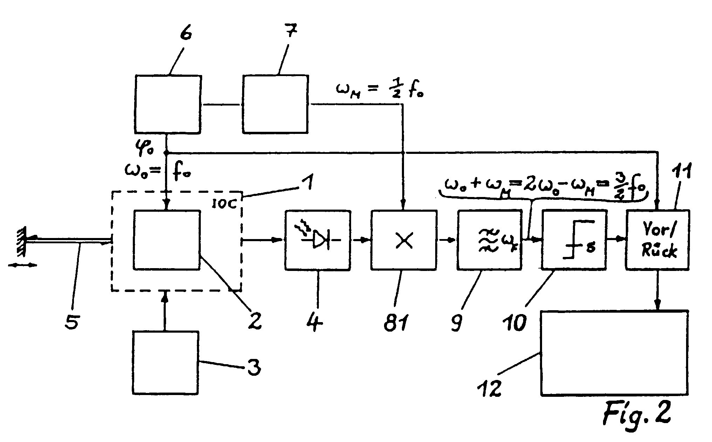

In Fig. 2 ist eine auf dem obigen Grundprinzip basierende Ausführungsform dargestellt.

Die Ansteuerung des Phasenmodulators 2 auf dem IOC 1 erfolgt dabei mit einem sinusförmigen Signal, dessen Frequenz durch die Grundfrequenz $f_o$ eines Generators 6 vorgegeben wird. Das von der Laserdiode 3 kommende Licht wird, vorzugsweise über Lichtleitfasern eingekoppelt, über die interferometrische Anordnung des IOC 1 auf die Meßstrecke 5 des Meßarmes und den Phasenmodulator 2, der bevorzugt im Referenzarm des Interferometers angeordnet ist, und als Überlagerungssignal aus beiden Interferometerarmen schließlich auf den Detektor 4 gebracht. Nach seiner Wandlung in ein elektrisches Signal wird das Überlagerungssignal einem Multiplikator 81 zugeführt, der die Einrichtung 8 zur Mischung des Überlagerungssignals mit einem Sinussignal als elektronische Gestaltungsvariante verkörpert. Das beizumischende Sinussignal wird dem Multiplikator 81 auf seinen zweiten Eingang ebenfalls vom Generator 6 über einen Frequenzteiler 7, in diesem speziellen Beispiel halbiert als Mischfrequenz $\omega_M = \tfrac{1}{2}f_o$, zugeführt. Um die Frequenzbedingung für das Bandpaßfilter 9 zu erfüllen, ist gemäß der Wahl von $\omega_M = \tfrac{1}{2}f_o$ die Summen- und die Differenzfrequenz mit der ersten und der zweiten Harmonischen von $\omega_o = f_o$ auszufiltern. Das geschieht mit Wahl der Filterfrequenz $\omega_F = \tfrac{3}{2}f_o$. Die beiden frequenz- und phasengleichen Signale am Ausgang des Bandpaßfilters 9 ergeben mit Wahl des Arbeitspunktes am Phasenmodulator 2 bei $J_1 (2\varphi_o) = J_2 (2\varphi_o)$) das gewünschte reine Kosinussignal. Dieses Signal, das in einer Schwellwerteinheit 10 einem Schwellwertkriterium und einem nachgeordneten Richtungsdiskriminator 11, an dem ebenfalls die Grundfrequenz $f_o$ des Generators 6 anliegt, einer Richtungserkennung für die Phasenverschiebung unterzogen wird, erfährt abschließend in einem Auswerterechner 12 seine Verarbeitung in üblicher Weise zur Ermittlung des Betrages der Phasenverschiebung und der zu messenden Wegdifferenz (Distanz x) entlang der Meßstrecke 5.

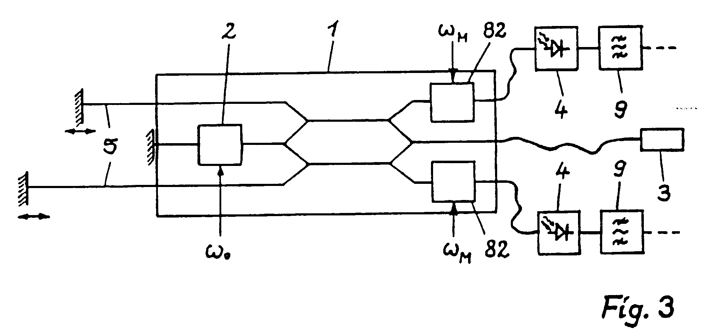

Das in Fig. 3 dargestellte zweite Ausführungsbeispiel der Erfindung beinhaltet die Darstellung eines integriert-optischen Chips 1(IOC 1). Außerdem wird die mögliche einfache Realisierung eines Doppelinterferometers (auch dreiarmiges Interferometer) mit zwei Meßarmen und einem Referenzarm stilisiert dargestellt. Von der Auswertung her können die Teilinterferometer jedoch völlig separat betrachtet werden. Ihre Gemeinsamkeit resultiert nur aus der gemeinsamen Nutzung von Laserdiode 3, Referenzarm mit Phasenmodulator 2 und in einem Prozeß erzeugten Streifenwellenleitern auf dem IOC 1. Der Vorteil zeigt sich in einer einheitlichen, kompakten Wegmessung von zwei unabhängigen Koordinaten.

Die Besonderheit gegenüber dem ersten Beispiel aus Fig. 2 liegt in der andersartigen Realisierung der Einheit 8 zur multiplikativen Mischung des Überlagerungssignals mit einem Sinussignal. Hier wird die vorteilhafte optische Mischung mittels eines zweiten Phasenmodulators 82 vor dem Detektor 4 offenbart. Der zweite Phasenmodulator 82 wird dazu integriert-optisch im Signalweg des Überlagerungssignals auf dem IOC 1 angeordnet, und zwar für jedes Überlagerungssignal der Teilinterferometer separat. Dem Detektor 4 folgt in jedem Auswertetrakt unmittelbar das Bandpaßfilter 9 mit der oben angegebenen allgemeinen Bedingung. Hervorzuheben ist hier noch die frequenz- und phasenstarre Kopplung der Ansteuersignale des Phasenmodulators 2 mit den zweiten Phasenmodulatoren 82, deren Erzeugung nicht explizit dargestellt wurde. Die Frequenzen können wie im ersten Beispiel mittels eines gemeinsamen Generators 6 und geeigneter Frequenzteilung beliebig im Rahmen der Filterbedingung gewählt werden, solange sich der Arbeitspunkt des Ansteuersignals geeignet einstellen läßt.

**Patentansprüche**

1. Phasenmoduliertes Interferometer mit einem Meßarm und einem Referenzarm, in dem in einem der beiden Interferometerarme ein Phasenmodulator (2) zur Phasenmodulation der optischen Strahlung angeordnet ist , wobei am Phasenmodulator (2) ein sinusförmiges Ansteuersignal mit einer Modulationsfrequenz $\omega_o$ mit einer Amplitude $\varphi_o$ anliegt, und in dem ein Detektor zur Aufnahme eines optischen Überlagerungssignals aus Meß-und Referenzarm vorhanden ist, wobei dem Detektor eine Auswerteelektronik zur Bestimmung der Phasenverschiebung des Signals nachgeordnet ist, dadurch gekennzeichnet, daß

- eine Einrichtung (8) zur multiplikativen Mischung des Überlagerungssignals mit einem Sinussignal einer geeigneten Mischfrequenz $\omega_M$ im Signalweg des Überlagerungssignals angeordnet ist, wobei dieses Sinussignal phasen-und frequenzstarr mit dem Ansteuersignal gekoppelt ist.
- dem Detektor (4) ein Bandpaßfilter (9) nachgeordnet ist, dessen Filterfrequenz $\omega_F$ sich aus der Übereinstimmung von Summen- und Differenzfrequenz aus zwei Harmonischen der Modulationsfrequenz $\omega_o$ und der Mischfrequenz $(\omega_M)$ zu

$$\omega_F = (2m-1)\,\omega_o + \omega_M = 2n\,\omega_o - \omega_M$$

mit m,n = 1,2,3,...
und m ≤ n

ergibt, so daß bei geeigneter Wahl eines durch die Amplitude $\varphi_o$ des Ansteuersignals beeinflußten Arbeitspunktes am Ausgang des Bandpaßfilters (9) ein Signal der Form

$$S = const \cdot cos(\omega_F t - kx)$$

entsteht, das mit üblichen Verfahren zur Bestimmung der Phasenverschiebung ausgewertet wird und bei dem t die Zeit, k die Wellenzahl und x die zu messende Distanz sind

2. Anordnung nach Anspruch 1, dadurch gekennzeichnet,
daß die Einrichtung (8) zur multiplikativen Mischung des Überlagerungssignals ein Multiplikator (81) ist, der zwischen dem Detektor (4) und dem Bandpaßfilter (9) angeordnet ist und an dessen zweitem Eingang das Sinussignal mit der Mischfrequenz $\omega_M$ anliegt.

3. Anordnung nach Anspruch 1, dadurch gekennzeichnet,
daß die Einrichtung (8) zur multiplikativen Mischung des Überlagerungssignals ein zweiter Phasenmodulator (82) ist, der im Signalweg des optischen Überlagerungssignals vor dem Detektor (4) angeordnet ist und dem das Sinussignal mit der Mischfrequenz $\omega_M$ als Ansteuersignal zugeführt wird.

4. Anordnung nach Anspruch 2 oder 3, dadurch gekennzeichnet,
daß der Arbeitspunkt des Ansteuersignals am Phasenmodulator (2) so eingestellt ist, daß die Amplitude $\varphi_o$ die Gleichung

$$J_{2m-1}\,(2\varphi_o) = J_{2n}\,(2\varphi_o)$$

mit m,n = 1,2,3...
und m ≤ n
erfüllen, wobei die $J_i$ die i-te Besselfunktion ist.

5. Anordnung nach Anspruch 3, dadurch gekennzeichnet,
daß in einem dreiarmigen Interferometer, bei dem vorzugsweise zur Erreichung der Kompensation von Wellenlängendriften der Laserdiode (3) zwei Referenzarme vorhanden sind, die beide mit demselben Meßarm zwei separat auszuwertende Überlagerungssignale hervorbringen, in jedem Signalweg der zwei Überlagerungssignale der zweite Phasenmodulator (82) vor dem Detektor (4) angeordnet ist.

6. Anordnung nach Anspruch 3, dadurch gekennzeichnet,
daß in einem dreiarmigen Interferometer, bei dem vorzugsweise zur Erreichung einer Zwei-Koordinaten-Wegmessung zwei Meßarme vorhanden sind, die beide mit demselben Referenzarm zwei separat auszuwertende Überlagerungssignale hervorbringen, in jedem Signalweg der zwei Überlagerungssignale ein zweiter Phasenmodulator (82) vor dem jeweiligen Detektor (4) angeordnet ist.

7. Anordnung nach Anspruch 3, 5 oder 6, dadurch gekennzeichnet,
daß sowohl die Aufspaltung und Überlagerung der optischen Signale als auch die Realisierung der elektrooptischen Phasenmodulatoren (2;82) integriert-optisch ausgeführt sind.

8. Anordnung nach Anspruch 1, dadurch gekennzeichnet,
daß aus dem Frequenzspektrum des Überlagerungssignals mindestens ein Signal mit einer von Ansteuersignal und Sinussignal verschiedener Frequenz zur Regelung des Ansteuersignals ausgefiltert wird.

## Claims

1. A phase-modulated interferometer comprising a measuring arm and a reference arm, wherein a phase modulator (2) for modulating the phase of the optical radiation is disposed in one of the two interferometer arms, a sinusoidal trigger signal at a modulation frequency $\omega_0$ having an amplitude $\phi_0$ being applied to the phase modulator (2), and wherein a detector is provided for receiving an optical heterodyne signal from the measuring arm and the reference arm, the detector being followed by an electronic evaluating unit for determining the phase shift of the signal, characterised in that a means (8) for multiplicative mixing of the heterodyne signal with a sinusoidal signal at a suitable mixing frequency $\omega_M$ is disposed in the signal path of the heterodyne signal, the sinusoidal signal being coupled so as to be rigid in phase and frequency with the trigger signal,

   the detector (4) is followed by a bandpass filter (9) whose filter frequency $\omega_F$ arising out of the agreement of the sum and difference frequencies of two harmonics of the modulation frequency $\omega_0$ and the mixing frequency $\omega_M$ is

   $$\omega_F = (2m-1)\omega_0 + \omega_M = 2n\,\omega_0 - \omega_M$$

   with m, n = 1,2,3,...
   and m ≤ n

   so that given suitable choice of a working point influenced by the amplitude $\omega_0$ of the trigger signal, a signal in the form

   $$S = const.\, \cos\,(\omega_F t - kx)$$

   is obtained at the output of the bandpass filter (9), and is evaluated by conventional methods of determining the phase shift and wherein t is the time, k is the wave number and x is the distance to be measured.

2. An arrangement according to claim 1, characterised in that the means (8) for multiplicative mixing of the heterodyne signal is a multiplier (81) which is disposed between the detector (4) and the bandpass filter (9) and whose second input is fed with the sinusoidal signal at the mixing frequncy $\omega_M$.

3. An arrangement according to claim 1, characterised in that the means (8) for multiplicative mixing of the heterodyne signal is a second phase modulator (82) which is disposed in front of the detector (4) in the path of the optical heterodyne signal and is supplied with the trigger signal in the form of the sinusoidal signal at the mixing frequency $\omega_M$.

4. An arrangement according to claim 2 or 3, characterised in that the working point of the trigger signal at the phase modulator (2) is so adjusted that the amplitude $\phi_0$ satisfies the equation

   $$J_{2m-1}(2\phi_0) = J_{2n}(2\phi_0)$$

   with m,n = 1,2,3...
   and m ≤ n
   where $J_i$ is the $i^{th}$ Bessel function.

5. An arrangement according to claim 3, characterised in that the second phase modulator (82) is disposed in front of the detector (4) in each signal path of the two heterodyne signals in a three-armed interferometer wherein two reference arms are provided preferably for compensating wavelength drifts of the laser diode (3) and use the same measuring arm to produce two heterodyne signals for separate evaluation.

6. An arrangement according to claim 3, characterised in that a second phase modulator (86) is disposed in front of the respective detector (4) in each signal path of the two heterodyne signals in a three-armed interferometer wherein two measuring arms for two-co-ordinate distance measurement are preferably provided and use the same reference arm to produce two heterodyne signals for separate evaluation.

7. An arrangement according to claim 3, 5 or 6, characterised in that splitting and heterodyning of the optical signals and construction of the electro-optical phase modulators (2; 82) are all effected by integrated optical means.

8. An arrangement according to claim 1, characterised in that at least one signal having a frequency different from the trigger signal and the sinusoidal signal is filtered out of the frequency spectrum of the heterodyne signal in order to control the trigger signal.

## Revendications

1. Interféromètre à modulation de phases ayant une branche de mesure et une branche de référence, dans lequel, dans l'une des deux branches, est disposé un modulateur de phase (2) pour effectuer une modulation de phases du rayonnement optique, un signal de commande sinusoïdal, de fréquence de modulation $\omega_o$ et d'amplitude $\varphi_o$ étant appliqué sur le modulateur de phase (2), et dans lequel un détecteur destiné à capter un signal de superposition optique à partir de la branche de mesure et de la branche de référence est prévu, une électronique d'évaluation destinée à déterminer le déphasage du signal étant disposée en aval du détecteur, caractérisé en ce que

- un dispositif (8), destiné à effectuer un mélange multiplicatif du signal de superposition à un signal sinusoïdal de fréquence mixte $\omega_M$ appropriée, étant disposé sur le trajet suivi par le signal de superposition, ce signal sinusoïdal étant couplé rigidement en phase et en fréquence, au signal de commande,

- un filtre basse-bande (9), dont la fréquence de filtrage $\omega_M$ résulte de la coïncidence de la fréquence de sommes et de différences à partir de deux harmoniques de la fréquence de modulation $\omega_o$ et de la fréquence de mélange $\omega_M$, selon

$$\omega_F = (2m-1) \, \omega_o + \omega_M = 2n\omega_o - \omega_M$$

avec m,n = 1,2,3...
et m $\leq$ n,

est disposé en aval du détecteur (4), de manière que, avec un choix approprié d'un point de travail influencé par l'amplitude $\varphi_o$ du signal de commande, on ait à la sortie du filtre passe-bande (9) un signal ayant la forme

$$S = const \cdot \cos(\omega_F t - kx)$$

qui est évalué avec des procédés usuels pour déterminer le déphasage et pour lequel t est le temps, k le nombre d'ondes et x la distance à mesurer.

2. Dispositif selon la revendication 1, caractérisé en ce que le dispositif (8) destiné à effectuer le mélange multiplicatif du signal de superposition est un multiplicateur (81) disposé entre le détecteur (4) et le filtre passe-bande (9) et à la deuxième sortie duquel est appliqué le signal sinusoïdal ayant la fréquence de mélange $\omega_M$.

3. Dispositif selon la revendication 1, caractérisé en ce que le dispositif (8) destiné à effectuer le mélange multiplicatif du signal de superposition est un deuxième modulateur de phase (82), disposé devant le détecteur (4) dans le chemin suivi par le signal de superposition optique et auquel est amené, à titre de signal de commande, le signal sinusoïdal ayant la fréquence de mélange $\omega_M$.

4. Dispositif selon la revendication 2 ou 3, caractérisé en ce que le point de travail du signal de commande sur le modulateur de phase (2) est réglé de manière que l'amplitude $\varphi_o$ satisfasse à l'égalité

$$J_{2m-1}(2\varphi_o) = J_{2n}(2\varphi_o)$$

avec m,n = 1,2,3...
et m $\leq$ n
$J_i$ étant la fonction de Bessel d'ordre i.

5. Dispositif selon la revendication 3, caractérisé en ce que, dans un interféromètre à trois bras, dans lequel, de préférence, pour obtenir la compensation des dérives de longueurs d'onde de la diode laser (3), sont prévus deux branches de référence, qui donnent les deux avec la même branche de mesure deux signaux de superposition à évaluer séparément, dans chaque chemin suivi par le signal des deux signaux de superposition, le deuxième modulateur de phase (82) est disposé devant le détecteur (4).

6. Dispositif selon la revendication 3, caractérisé en ce que dans un interféromètre à trois branches, dans lequel, de préférence, pour obtenir une mesure de course à deux coordonnées sont prévus deux branches de mesure, les deux donnant avec la même branche de référence deux signaux de superposition à évaluer séparément, dans chaque chemin suivi par le signal, pour les deux signaux de superposition, un deuxième modulateur de phase (82) est disposé devant le détecteur (4) respectif.

7. Dispositif selon la revendication 3, 5 ou 6, caractérisé en ce que tant la division et la superposition des signaux optiques qu'également la réalisation des modulateurs de phase (2; 82) électro-optiques sont d'une réalisation optiquement intégrée.

8. Dispositif selon la revendication 1, caractérisé en ce qu'au moins un signal, ayant une fréquence différente de celle du signal de commande et du signal sinusoïdal, est séparé par filtrage à partir du spectre de fréquence du signal de superposition, en vue de réguler le signal de commande.

$$(2m-1)\omega_o + \omega_M = 2n\omega_o - \omega_M$$

Auswerteeinheit
zur Bestimmung
der Phasenverschiebung in 5

Fig. 1

$$\omega_M = \frac{1}{2} f_0$$

$$\varphi_0$$

$$\omega_0 = f_0$$

$$\omega_0 + \omega_M = 2\omega_0 - \omega_M = \frac{3}{2} f_0$$

*Fig. 2*

Fig. 3